(19) **Europäisches Patentamt / European Patent Office / Office européen des brevets**

(11) **EP 2 370 194 B1**

(12) **FASCICULE DE BREVET EUROPEEN**

(45) Date de publication et mention
de la délivrance du brevet:
**10.04.2019 Bulletin 2019/15**

(21) Numéro de dépôt: **09801559.7**

(22) Date de dépôt: **23.12.2009**

(51) Int Cl.:
*B01D 21/20* (2006.01)     *C02F 11/12* (2019.01)
*C02F 1/42* (2006.01)     *C02F 1/52* (2006.01)
*C02F 1/00* (2006.01)     *B01D 21/32* (2006.01)

(86) Numéro de dépôt international:
**PCT/IB2009/055928**

(87) Numéro de publication internationale:
**WO 2010/073222 (01.07.2010 Gazette 2010/26)**

(54) **DECANTEUR STATIQUE RAPIDE POUR PRE-EPAISSISSEMENT DES BOUES DE TRAITEMENT D'EAU, ET INSTALLATION COMPORTANT UN TEL DECANTEUR.**

SCHNELLER STATISCHER SCHWERKRAFTABSCHEIDER ZUM VOR-DICKEN VON SCHLAMM AUS DER ABWASSERBEHANDLUNG SOWIE EINRICHTUNG MIT DEM SCHWERKRAFTABSCHEIDER

RAPID STATIC DECANTER FOR PRE-THICKENING OF SLUDGE FROM WATER TREATMENT AND INSTALLATION HAVING SAID DECANTER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.12.2008 FR 0807445**

(43) Date de publication de la demande:
**05.10.2011 Bulletin 2011/40**

(73) Titulaire: **Suez International**
**92040 Paris la Défense Cedex (FR)**

(72) Inventeurs:
• **DESCAMPS, Patrick**
**F-78160 Marly le Roi (FR)**

• **PREVOT, Claude**
**F-78140 Vélizy (FR)**
• **HAUBRY, André**
**F-78250 Mezy sur Seine (FR)**

(74) Mandataire: **IPAZ**
**16, rue Gaillon**
**75002 Paris (FR)**

(56) Documents cités:
**EP-A2- 0 158 714     DE-A1- 4 138 469**
**GB-A- 1 531 939     US-A- 1 518 136**
**US-A- 3 281 594     US-A- 4 055 494**
**US-A- 4 226 714**

**Description**

L'invention est relative à un décanteur statique pour pré-épaissir les boues liquides dans une installation de traitement d'eau, en particulier d'eaux usées, comportant un fond incliné et équipé d'une pompe d'alimentation en boues liquides, d'un dispositif d'injection de polymère dans les boues liquides, d'un rejet de surverse et d'une pompe d'extraction des boues pré-épaissies du décanteur.

Des décanteurs de ce type sont connus, notamment d'après le Mémento Technique de l'Eau, 10ème Edition DEGREMONT, Tome 2, pages 833 et suivantes.

Dans une installation de traitement d'eau, le décanteur se trouve généralement en aval d'un dispositif de clarification, lequel est situé en aval d'un bassin d'aération. L'effluent provenant du clarificateur et constituant les boues liquides entrant dans le décanteur présente une concentration variable en matières en suspension, pouvant aller de 1 à 8 g/L. Les boues pré-épaissies, extraites du décanteur peuvent présenter une concentration en matières en suspension de 15 à 20 g/L.

Ces boues sont ensuite soumises à un traitement d'épaississement ou de déshydratation afin de réduire leur volume.

Les caractéristiques des boues pré-épaissies extraites présentent des variations qui demandent à être réduites pour optimiser le fonctionnement des appareils d'épaississement installés en aval du décanteur, et pour diminuer la consommation d'énergie de l'ensemble.

Il est également souhaitable d'améliorer le degré de pré-épaississement des boues, pour alléger le traitement d'épaississement et de déshydratation, et contribuer ainsi à réduire la consommation d'énergie.

L'invention a donc pour but, surtout, de fournir un décanteur statique qui permet d'obtenir, en sortie, une boue pré-épaissie favorable à un fonctionnement optimal d'un appareil d'épaississement, notamment une centrifugeuse, sans provoquer une dégradation de la qualité de l'eau traitée.

L'invention a également pour but de fournir un décanteur équipé de manière à optimiser la consommation de polymère.

Selon l'invention, un décanteur statique pour pré-épaissir les boues liquides dans une installation de traitement d'eau, en particulier d'eaux usées, en vue d' optimiser le fonctionnement d' appareils d'épaississement installés en aval du décanteur, comporte un fond incliné, est équipé d'une pompe d'alimentation en boues liquides, d'un dispositif d'injection de polymère dans les boues liquides, d'un rejet de surverse et d'une pompe d'extraction des boues pré-épaissies du décanteur,

et est caractérisé en ce qu'il comporte :

- des moyens pour accélérer la décantation des boues,
- des moyens de régulation de la concentration en matières en suspension en sortie des boues pré-épaissies, propres à maintenir sensiblement constante la concentration des boues pré-épaissies extraites du décanteur, malgré les variations de concentrations en entrée,
- et des moyens de régulation du niveau du voile de boue propres à maintenir ce niveau le plus bas possible.

Le décanteur statique est ainsi un décanteur rapide qui permet d'obtenir des boues pré-épaissies en un temps suffisamment court pour éviter la dégradation de l'eau traitée, notamment en un temps inférieur à celui qui entraînerait un relargage du phosphore par les bactéries. Le phosphore relargué détériorerait la qualité de l'eau traitée. Le décanteur rapide assure en outre un pré-épaississement constant et élevé pour le traitement aval.

Les moyens pour accélérer la décantation des boues peuvent comprendre un angle d'inclinaison du fond du décanteur sur l'horizontale compris entre 20°et 45°, ainsi qu'un racleur tournant de fond. Ce racleur comporte de préférence un bras équipé de lames racleuses disposées en jalousie de manière à ramener efficacement et rapidement les boues décantées vers une fosse centrale. Cette fosse centrale est aussi raclée. Le bras est avantageusement équipé d'une herse favorisant le pré-épaississement de la boue. Le bras du racleur peut avoir la forme d'un V épousant le fond du décanteur.

De préférence, les moyens de régulation de la concentration des boues pré-épaissies comprennent des moyens de régulation du flux massique de matières en suspension entrant dans le décanteur, et des moyens de régulation de la concentration des boues pré-épaissies à partir du flux massique entrant.

Avantageusement, les moyens de régulation du flux massique de matières en suspension entrant dans le décanteur comprennent :

- une pompe d'alimentation en boues liquides à vitesse variable,
- un débitmètre de boues liquides,
- une sonde de mesure de la concentration de matières en suspension dans les boues liquides, et
- un régulateur qui reçoit les informations provenant du débitmètre et de la sonde, et commande la vitesse de la pompe d'alimentation pour maintenir sensiblement constant le flux massique d'alimentation.

De préférence, les moyens de régulation de la concentration des boues pré-épaissies à partir du flux massique entrant comprennent :

- une pompe d'extraction des boues pré-épaissies à vitesse variable,
- un débitmètre de boues pré-épaissies,
- une sonde de mesure de la concentration de matières en suspension dans les boues pré-épaissies, et
- un régulateur qui reçoit les informations provenant du débitmètre et de la sonde, et commande la vitesse de la pompe d'extraction pour maintenir sensiblement constante la concentration des boues pré-épaissies extraites, le débit d'extraction initial étant calculé à partir du flux massique entrant et d'une consigne de concentration de la boue pré-épaissie extraite.

Avantageusement, le décanteur comporte des moyens de régulation du niveau du voile de boue propres à maintenir ce niveau le plus bas possible, avec optimisation de consommation du polymère.
Les moyens de régulation du niveau du voile de boue peuvent comprendre une sonde de mesure de la hauteur du voile de boue, une pompe d'alimentation en polymère à vitesse variable, un débitmètre sur la conduite d'injection du polymère, et un régulateur ou variateur de vitesse recevant les informations de la sonde de mesure de la hauteur du voile de boue et du débitmètre, et propre à commander la vitesse de la pompe pour optimiser la consommation de polymère.
Le décanteur est prévu pour que le temps de séjour de la boue dans le décanteur ne dépasse pas deux heures. De préférence, le décanteur comporte un fond tronconique de section décroissante vers le bas, l'angle d'inclinaison ($\alpha$) des génératrices du fond sur l'horizontale étant compris entre 20° et 45°. Le niveau du voile de boue est avantageusement maintenu sensiblement au niveau de la grande base du fond tronconique. La vitesse périphérique du racleur peut être comprise entre 10 et 20 cm/s. Avantageusement, le racleur comprend au moins une lame racleuse et une herse.
L'invention concerne également une installation de traitement d'eau, caractérisée en ce qu'elle comporte un décanteur tel que défini précédemment, et en ce que la sortie d'extraction du décanteur est reliée directement à un appareil d'épaississement des boues, en particulier une centrifugeuse ou un filtre à bande, sans bâche tampon de boue entre le décanteur et l'appareil d'épaississement de boues.
L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est une coupe verticale schématique d'un décanteur selon l'invention, avec ses équipements.
Fig. 2 est une coupe verticale diamétrale, à plus grande échelle, montrant des détails du racleur tournant avec ses lames racleuses et sa herse.
Fig.3 est une coupe horizontale schématique du racleur de Fig.2.
Fig.4 est un schéma sommaire d'une installation de traitement d'eau avec décanteur selon l'invention.
Fig. 5 est un diagramme illustrant la correction de l'ajustement du débit d'extraction, et
Fig.6 est un diagramme illustrant le principe du calcul du taux de polymère appliqué.

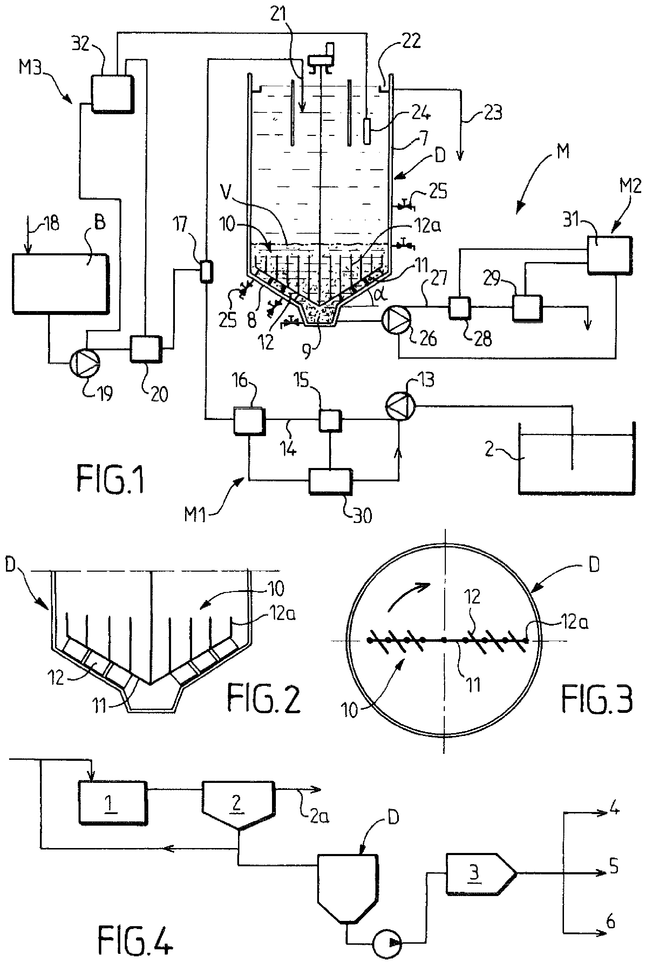

En se reportant à Fig. 1 et 4, on peut voir un décanteur statique rapide D pour une installation de traitement d'eaux usées schématiquement illustrée sur Fig.4. L'installation comprend un bassin d'aération 1 de traitement par boues activées, suivi d'un clarificateur 2 dont les eaux clarifiées sont extraites en partie supérieure 2a, tandis que les boues liquides sont dirigées, pour partie, vers le décanteur D, et pour l'autre partie sont recyclées en tête du bassin 1.
La concentration en matières en suspension des boues liquides qui arrivent dans le décanteur D peut être d'environ 1à 8 g/L. La concentration en matières en suspension de la boue pré-épaissie sortant du décanteur D est généralement comprise entre 15 et 20 g/L. L'effluent sortant du décanteur D est dirigé vers un appareil d'épaississement, notamment une centrifugeuse 3. La concentration en matières en suspension à la sortie de la centrifugeuse 3 peut être comprise entre 50 et 60 g/L (voire de 200 à 300 g/L). L'effluent de sortie de la centrifugeuse est envoyé soit à un dispositif 4 de digestion des boues, soit à un appareil 5 de déshydratation, soit à un dispositif 6 de séchage.
Afin de faire fonctionner à l'optimum de ses performances l'appareil d'épaississement, notamment la centrifugeuse 3, le décanteur rapide D selon l'invention est prévu pour permettre d'obtenir en sortie une boue pré-épaissie ayant une concentration sensiblement constante en matières en suspension, malgré les variations de concentration à l'entrée.
Comme visible sur Fig.1, le décanteur rapide D est constitué par un réacteur 7 d'axe vertical, avec un fond 8 incliné sur l'horizontale selon un angle $\alpha$, qui peut être compris entre 20 et 45°.
Généralement, le réacteur 7 est cylindrique et le fond 8 est tronconique, de section décroissante vers le bas, convergent vers une fosse centrale de récupération 9. Le décanteur D est équipé d'un racleur tournant 10 de fond avec un bras 11 en forme de V épousant, suivant le diamètre, le fond 8 du décanteur. Le bras 11 est équipé de lames racleuses 12 disposées en jalousie (Fig.2 et 3), de manière à ramener efficacement et rapidement les boues décantées vers la fosse centrale de récupération 9, elle aussi raclée, et d'une herse 12a favorisant le pré-épaississement de la boue. La herse 12a présente des lames verticales réparties suivant la direction radiale. La fosse centrale 9 est spécialement étudiée pour éviter les courts-circuits d'extraction des boues. Le décanteur D est prévu pour limiter à moins de deux heures les temps de séjour de la boue.

Le décanteur D est équipé d'une pompe 13 à vitesse variable, pour l'alimentation en boues liquides, qui débite sur une conduite de refoulement 14 équipée d'une sonde 15 de mesure de la concentration D1 en matières en suspension. La sonde 15 est généralement du type optique. Un débitmètre 16, notamment de type électromagnétique, est installé sur la conduite 14. En aval du débitmètre un mélangeur 17 est disposé sur la conduite pour permettre l'injection dans la boue liquide de polymère favorisant la décantation des boues. La solution de polymère injectée est préparée dans une cuve B avec addition d'eau potable 18. Une pompe à vitesse variable 19 est prévue pour assurer l'alimentation en polymère du mélangeur 17. Un débitmètre 20 est installé sur la conduite de refoulement de la pompe 19 pour fournir le débit de solution de polymère envoyé au mélangeur 17. Les boues liquides, mélangées avec le polymère, sont introduites en partie haute 21 du décanteur D qui est équipé, dans sa partie supérieure intérieure, d'une goulotte 22 pour récupérer la surverse évacuée par un rejet 23 extérieur.

Le décanteur D est en outre équipé, en partie haute, d'une sonde 24 de mesure de la hauteur du voile de boue V dans le décanteur. La sonde 24 est généralement du type à ultrasons. Des vannes 25 sont prévues à différents niveaux sur la paroi extérieure du décanteur pour permettre des prises d'échantillons.

L'extraction des boues pré-épaissies, à partir de la fosse 9 de récupération, est assurée à l'aide d'une pompe à vitesse variable 26 dont le refoulement débite dans une conduite 27 sur laquelle est installée une sonde 28 de mesure de la concentration D2 en matières en suspension et un débitmètre 29.

A titre d'exemples numériques, non limitatifs, la pompe d'alimentation 13 peut avoir un débit compris entre 9 et 53 m$^3$/h tandis que la pompe d'extraction 26 peut avoir un débit compris entre 3 et 16 m$^3$/h. Le décanteur D peut avoir un diamètre d'environ 3 mètres et une hauteur d'environ 4 mètres.

Les informations provenant de la sonde 15 et du débitmètre 16 sont envoyées à un régulateur PID 30 dont la sortie commande la vitesse de rotation de la pompe 13.

Les informations provenant de la sonde 28 et du débitmètre 29 sont envoyées sur un régulateur PID 31 dont la sortie commande la vitesse de rotation de la pompe d'extraction 26.

Les informations provenant de la sonde 24 et du débitmètre 20 sont envoyées sur un régulateur PID, ou un variateur de vitesse, 32 dont la sortie commande la vitesse de rotation de la pompe 19 d'alimentation en polymère.

Les régulateurs 30, 31, avec les sondes de mesure 15, 28, les débitmètres 16, 29 et les pompes à vitesse variable 13, 26, constituent des moyens M de régulation de la concentration en matières en suspension des boues extraites du décanteur D.

Le régulateur 30, la sonde de mesure 15, le débitmètre 16 et la pompe à vitesse variable 13 constituent des moyens M1 de régulation du flux massique FM1 de matières en suspension entrant dans le décanteur D.

Le régulateur 31, la sonde de mesure 28, le débitmètre 29 et la pompe à vitesse variable 26 constituent des moyens M2 de régulation de la concentration des boues extraites, à partir du flux massique entrant FM1.

Le régulateur ou variateur 32, la sonde 24 de mesure de la hauteur du voile, le débitmètre 20 et la pompe à vitesse variable 19 constituent des moyens M3 de régulation du débit de polymère injecté dans le décanteur D.

L'automatisme de pilotage des flux traités sur le décanteur D repose sur ces différentes régulations :

- le contrôle du flux constant FM1 d'alimentation en boue liquide du réacteur,
- le contrôle du maintien de la concentration D2 des boues extraites pré-épaissies,
- le maintien au plus bas du niveau du voile V de boue dans le réacteur D avec une optimisation de la consommation du polymère.

L'ensemble de ces trois régulations permet d'assurer :

- l'optimisation de la consommation du polymère injecté, dés que la nécessité d'ajouter le polymère apparaît ;
- la surveillance de la qualité de l'eau clarifiée en surverse.
- le maintien du voile de boue à un niveau le plus faible possible pour éviter des temps de séjour élevés, un vieillissement et une dégradation de la boue pré-épaissie (dénitrification des boues, relargage du phosphore).
- le maintien de la concentration constante des boues de sortie, ce qui permet de réduire, voire de supprimer, une bâche tampon de récupération des boues pré-épaissies, habituellement placée en amont de la centrifugeuse 3 et en aval du décanteur D.

Le fonctionnement du décanteur D et des moyens de régulation est le suivant.

**Régulation du flux massique d'entrée des boues**

Le flux massique FM 1 de matières en suspension dans l'eau à traiter arrivant dans le décanteur D est fixé par un opérateur. La concentration D1 de matières en suspension, dans l'eau à traiter, est délivrée par la sonde, ou capteur, 15. Soit F1 le débit d'eau à traiter, le flux massique est F1×D1 qui doit être égal à la valeur fixée FM1. La consigne de débit F1 à assurer est déterminée par :

$$F1 = FM1 / D1$$

Le régulateur PID 30 positionne la vitesse de la pompe d'alimentation 13 pour maintenir la consigne de débit F1 en utilisant la mesure du débitmètre 16.

**Régulation de la concentration des boues extraites à partir du flux massique entrant FM1.**

La consigne de concentration de la boue extraite (Cons D2) est fixée par l'opérateur. Un premier débit d'extraction F2 est calculé en supposant en première approximation que la concentration effective de la boue extraite est égale à la valeur choisie de consigne. Dans ce cas, en écrivant que le flux massique extrait est égal au flux massique entrant : F2x Cons D2 = FM 1, on déduit :

$$F2 = FM1 / Cons\ D2$$

Le régulateur PID 31 positionne la vitesse de la pompe d'extraction 26 pour maintenir la consigne de débit Q = F2, en utilisant la mesure du débitmètre 29. Toutefois, la concentration D2 de la boue extraite, mesurée par la sonde 27, ne sera pas égale à Cons $D_2$, mais en sera voisine. Une correction périodique (toutes les 30secondes à 300secondes) de débit est effectuée pour ajuster le débit afin d'obtenir une concentration de sortie égale à la consigne fixée.

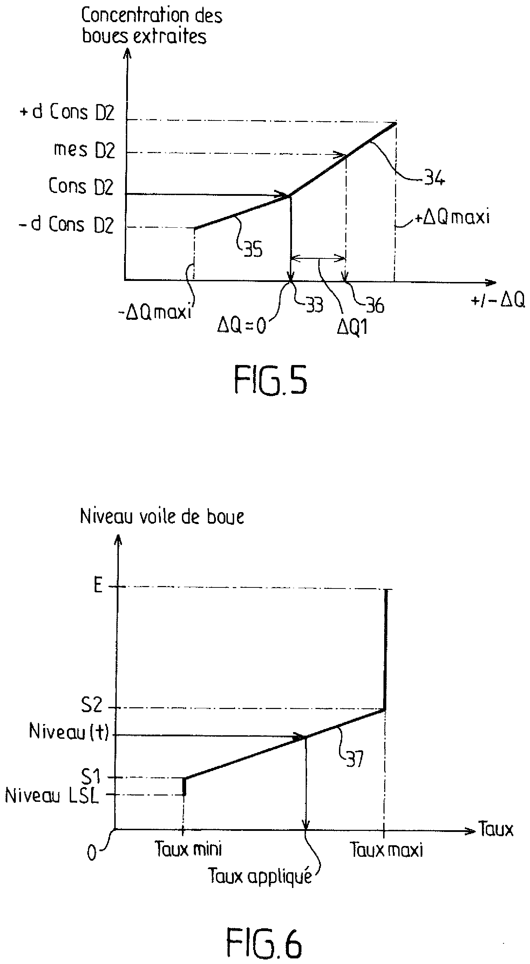

Cette correction de débit est expliquée avec référence au diagramme de Fig.5. La correction de débit ΔQ est portée en abscisse et les écarts ± d ConsD2 entre la valeur mesurée D2 et la valeur de consigne Cons D2 sont portés en ordonnée. L'origine des corrections de débit, correspondant à ΔQ = 0, est située au point 33 qui correspond au débit permettant d'obtenir effectivement la valeur Cons D2. Les corrections ΔQ sont positives ou négatives selon que le débit doit être augmenté ou diminué par rapport au débit correspondant au point 33. L'origine des écarts ± d ConsD2 est située à la valeur ConsD2, et les écarts sont positifs lorsque la mesure D2 est supérieure à ConsD2, et négatifs dans le cas inverse. Les courbes 34, 35 de correction de débit sont établies expérimentalement. La courbe 34 à plus forte pente correspond à une déconcentration d'un effluent trop chargé en matières solides extrait du décanteur D, tandis que la courbe 35, de pente plus faible, correspond à un épaississement d'un effluent pas assez chargé en matières solides, extrait du décanteur D. Les réactions du système sont différentes à la déconcentration et à l'épaississement d'où les pentes différentes.

Dans l'exemple illustré sur Fig.5, le premier débit d'extraction F2 calculé donne une valeur de concentration mesurée par la sonde 28 égale à : mes D2 qui est supérieure à D2. A cette mesure, la courbe 34 fait correspondre le point 36 sur l'axe des abscisses. Le débit initial calculé F2 est augmenté de ΔQ1.La régulation assurée par le régulateur 30 permet de rapprocher la concentration mesurée de la consigne Cons D2.

Dans la pratique les valeurs maximales de correction de débit ± ΔQ maxi sont de l'ordre de ± 0.5 m$^3$/h. Le signal de mesure correspond à une moyenne sur 10 minutes, rafraîchie toutes les minutes.

**Régulation de l'injection du polymère**

La pompe 19 de polymère est pilotée par le régulateur 32 ou variateur de vitesse, et la consigne de vitesse est calculée à partir du flux massique d'alimentation FM1 = F1×D1 et de la position du niveau de voile de boue V.

*Calcul du débit de polymère.*

La consigne de polymère est calculée avec les éléments suivants :

$T_{Polym}$ = Taux de traitement de polymère (*dose optimale de polymère à injecter dans l'eau à traiter*)
$C_{Polym}$ = concentration du polymère (*concentration du polymère dans la solution injectée*)

$$\text{FMA}_{\text{calculé}} = \text{Calcul du flux } (F1_{\text{réel}} \times D1_{\text{réel}})$$

Cons $Q_{\text{polym}}$ =Consigne du débit de polymère (*consigne du débit de la solution de polymère injectée*)

$$\text{Cons } Q_{\text{polym}} \times C_{\text{Polym}} = T_{\text{Polym}} \times \text{FMA}_{\text{calculé}}$$

d'où la consigne de débit de polymère :

$$\text{Cons } Q_{\text{polym}} = T_{\text{Polym}} \times \text{FMA}_{\text{calculé}} \times 1/ C_{\text{Polym}}$$

*Calcul du débit de polymère modulé en fonction du niveau du voile de boue*

Les explications qui suivent sont données avec référence à Fig.6 qui représente une courbe d'ajustement du taux de polymère. Le niveau du voile de boue est porté en ordonnée, et le taux de polymère est porté en abscisse.
L'origine O des ordonnées correspond au niveau de voile de boue le plus bas possible, c'est à dire situé au fond du décanteur D. S1 ou « Seuil 1 » correspond au niveau du voile de boue obtenu avec le taux de polymère considéré comme minimum. Ce taux mini de polymère peut être de l'ordre de 0.5 mg/L. S2 ou « Seuil 2 » correspond au niveau du voile de boue obtenu avec le taux de polymère considéré comme maximum. Ce taux maxi peut être de l'ordre de 2 mg/L. La courbe 37 représente la variation du niveau du voile de boue en fonction du taux de polymère à appliquer.
Sur l'axe des ordonnées, le point E correspond au niveau théorique le plus haut possible du voile, c'est-à-dire au sommet au niveau de la sonde 24 ; le point Niveau LSL, situé au-dessous de « Seuil 1 » correspond à l'arrêt de l'injection du polymère.
Le signal indiquant le niveau du voile de boue V est fourni par la sonde 24 à ultrasons. Une moyenne sur 10mn est effectuée et rafraîchie toutes les minutes.
Le débit de la pompe 19 de polymère reste calculé à partir du flux massique d'alimentation calculé FMA $_{\text{calculé}}$. Ce débit est corrigé périodiquement si nécessaire pour maintenir le niveau du voile de boue V dans une plage donnée comprise entre S1 et S2, et le plus bas possible. Cette correction est effectuée dans les conditions suivantes.
Périodiquement toutes les T3 secondes, avec 1s < T3 < 1800 s, la position du voile du niveau du voile de boue V est surveillée. Au « Niveau (t) », à l'instant t correspond le « taux appliqué ».
Le taux de traitement $T_{\text{Polym}}$ appliqué pour calculer le débit de polymère sera corrigé en fonction de la mesure de niveau du voile de boue pris à la fin de la temporisation T3 écoulée.
Tant que « Niveau(t) » reste dans la fourchette comprise entre S1 et S2, le taux de polymère appliqué est ajusté, conformément à la portion de droite 37.
Dés que le niveau du voile de boue devient inférieur au seuil S1, le taux de polymère injecté est maintenu au Taux mini. Si le niveau du voile descend en dessous du Niveau LSL, l'injection est arrêtée.
Lorsque le niveau du voile de boue devient supérieur au seuil S2, le taux de polymère injecté est maintenu au Taux maxi, pour faire descendre le voile de boue.
Les limites du $T_{\text{Polym}}$ appliqué sont par exemple (0,5 mg/L en mini et 2,0 g/L en maxi.). Au démarrage le premier calcul se fait avec un taux initial (T init $_{\text{Polym}}$) paramétrable. Les seuils S1 et S2 sont paramétrables.
L'invention permet de maintenir sensiblement constante la concentration des boues extraites et d'optimiser ainsi le fonctionnement des machines, notamment centrifugeuses, en aval du décanteur. Il en résulte un meilleur rendement de l'installation et une diminution de l'énergie consommée.
L'invention permet également de réduire la consommation de polymère, qui est divisée pratiquement par deux, tout en conservant, et même améliorant, la qualité des boues extraites.
Les lames racleuses 12 du racleur 10 permettent de ramener rapidement les boues vers la zone 9 pour diminuer leur temps de séjour dans le décanteur D. Le temps de séjour des boues dans le décanteur est de préférence inférieur à 2 heures.
La herse 12a permet de mettre en mouvement les flocs, favorisant un dégazage et une concentration des boues.

**Revendications**

1. Décanteur statique pour pré-épaissir les boues liquides dans une installation de traitement d'eau, en particulier d'eaux usées, en vue d'optimiser le fonctionnement d'appareils d'épaississement installés en aval du décanteur. et pour ne dépasser pas le temps de séjour de la boue dans le décanteur de deux heures, étant équipé

- d'une pompe (13) d'alimentation en boues liquides,
- d'un dispositif d'injection (17) de polymère dans les boues liquides,
- d'un rejet de surverse (23)
- d'une pompe (26) d'extraction des boues pré-épaissies du décanteur,
- des moyens pour accélérer la décantation des boues, comportant un fond incliné (8) du décanteur,
- des moyens de régulation (M) de la concentration en matières en suspension en sortie, des boues pré-épaissies, propres à maintenir sensiblement constante la concentration des boues pré-épaissies extraites du décanteur, malgré les variations de concentrations en entrée, et comprenant des moyens de régulation (M1) du flux massique (FM1) de matières en suspension entrant dans le décanteur, et des moyens de régulation (M2) de la concentration des boues pré-épaissies à partir du flux massique entrant,
- et des moyens de régulation (M3) du niveau du voile de boue (V) propres à maintenir ce niveau le plus bas possible, les moyens de régulation (M3) du niveau du voile de boue comprenant une sonde (24) de mesure de la hauteur du voile de boue, une pompe d'alimentation en polymère à vitesse variable (19), un débitmètre (20) sur la conduite d'injection du polymère, et un régulateur (32) ou variateur de vitesse recevant les informations de la sonde (24) de mesure de la hauteur du voile de boue et du débitmètre (20), et propre à commander la vitesse de la pompe (19) pour optimiser la consommation de polymère.

2. Décanteur selon la revendication 1, **caractérisé en ce que** les moyens pour accélérer la décantation des boues comprennent un angle d'inclinaison ($\alpha$) du fond (8) du décanteur sur l'horizontale compris entre 20° et 45°, et un racleur tournant de fond (10).

3. Décanteur selon la revendication 2, **caractérisé en ce que** le racleur (10) comporte un bras (11) équipé de lames racleuses (12) disposées en jalousie de manière à ramener efficacement et rapidement les boues décantées vers une fosse centrale (9) qui est aussi raclée.

4. Décanteur selon la revendication 3, **caractérisé en ce que** le bras (11) est équipé d'une herse (12a) favorisant le pré-épaississement de la boue.

5. Décanteur selon l'une quelconque des revendications précédentes, **caractérisé en ce que** les moyens de régulation (M1) du flux massique de matières en suspension entrant dans le décanteur comprennent :

- une pompe d'alimentation en boues liquides à vitesse variable (13),
- un débitmètre (16) de boues liquides,
- une sonde de mesure (15) de la concentration (D1) de matières en suspension dans les boues liquides, et
- un régulateur (30) propre à recevoir les informations provenant du débitmètre (16) et de la sonde (15), et propre à commander la vitesse de la pompe d'alimentation (13) pour maintenir sensiblement constant le flux massique d'alimentation (FM1).

6. Décanteur selon l'une quelconque des revendications précédentes, **caractérisé en ce que** les moyens de régulation (M2) de la concentration des boues extraites à partir du flux massique entrant comprennent :

- une pompe d'extraction de boues pré-épaissies à vitesse variable (26),
- un débitmètre (29) de boues pré-épaissies,
- une sonde de mesure (28) de la concentration (D2) de matières en suspension dans les boues pré-épaissies, et
- un régulateur (31) propre à recevoir les informations provenant du débitmètre (29) et de la sonde (28), et propre à commander la vitesse de la pompe d'extraction (26) pour maintenir sensiblement constante la concentration des boues pré-épaissies, le débit d'extraction initial étant calculé à partir du flux massique entrant (FM1) et d'une consigne de concentration de la boue extraite (Cons D2).

7. Décanteur selon l'une quelconque des revendications précédentes, **caractérisé en ce que** le niveau du voile de boue (V) peut être
maintenu sensiblement au niveau de la grande base d'un fond tronconique par les moyens de régulation.

8. Décanteur selon la revendication 2, **caractérisé en ce que** la vitesse périphérique du racleur (10) est comprise entre 10 et 20 cm/s.

9. Installation de traitement d'eau, **caractérisée en ce qu'**elle comporte un décanteur selon l'une quelconque des revendications précédentes et **en ce que** la sortie d'extraction du décanteur est reliée directement à un appareil d'épaississement des boues, en particulier une centrifugeuse (3) ou un filtre à bande, sans bâche tampon de boue épaissie entre le décanteur (D) et l'appareil d'épaississement des boues.

**Patentansprüche**

1. Statischer Schwerkraftabscheider zum Voreindicken der flüssigen Schlämme in einer Wasseraufbereitungsanlage, insbesondere für Abwässer, zur Optimierung des Betriebs von stromabwärts des Schwerkraftabscheiders installierten Eindickungsvorrichtungen und um die Verweildauer des Schlamms in dem Schwerkraftabscheider von zwei Stunden nicht zu überschreiten,
wobei der Schwerkraftabscheider aufweist:

   - eine Pumpe (13) zur Zufuhr von flüssigen Schlämmen,
   - eine Vorrichtung (17) zum Einspritzen von Polymer in die flüssigen Schlämme,
   - einen Überlaufabfluss (23),
   - eine Pumpe (26) zum Abführen von voreingedickten Schlämmen aus dem Schwerkraftabscheider,
   - Einrichtungen zum Beschleunigen des Abscheidens der Schlämme, mit einem schrägen Boden (8) des Schwerkraftabscheiders,
   - Einrichtungen (M) zum Regeln der Schwebstoffkonzentration der voreingedickten Schlämme am Ausgang, welche geeignet sind, die Konzentration der aus dem Schwerkraftabscheider abgeführten voreingedickten Schlämme trotz der Konzentrationsschwankungen am Eingang im Wesentlichen konstant zu halten, und mit Einrichtungen (M1) zum Regeln des Massendurchflusses (FM1) der in den Schwerkraftabscheider einströmenden Schwebstoffe, und Einrichtungen (M2) zum Regeln der Konzentration der voreingedickten Schlämme anhand des einströmenden Massendurchflusses,
   - und Einrichtungen (M3) zum Regeln des Schlammspiegelniveaus (V), welche geeignet sind, dieses Niveau so niedrig wie möglich zu halten,

   wobei die Einrichtungen (M3) zum Regeln des Schlammspiegelniveaus (V) eine Sonde (24) zum Messen der Höhe des Schlammspiegels, eine Polymerzufuhrpumpe (19) mit variabler Geschwindigkeit, einen Durchflussmesser (20) in der Polymereinspritzleitung und einen Geschwindigkeitsregler (32) oder -variator aufweist, der die Informationen der Sonde (24) zum Messen der Höhe des Schlammspiegels und des Durchflussmessers (20) empfängt, und der geeignet ist, die Geschwindigkeit der Pumpe (19) zu steuern, um den Polymerverbrauch zu optimieren.

2. Schwerkraftabscheider nach Anspruch 1, **dadurch gekennzeichnet, dass** die Einrichtungen zum Beschleunigen des Abscheidens der Schlämme einen Neigungswinkel ($\alpha$) des Bodens (8) des Schwerkraftabscheiders in Bezug zur Horizontalen zwischen 20° und 45° und einen drehenden Bodenabstreifer (10) aufweisen.

3. Schwerkraftabscheider nach Anspruch 2, **dadurch gekennzeichnet, dass** der Abstreifer (10) einen Arm (11) aufweist, welcher mit Abstreifblättern (12) versehen ist, die nach Art einer Jalousie derart angeordnet sind, dass die abgeschiedenen Schlämme effizient und schnell in Richtung eines ebenfalls abgestreiften Mittelgrabens (9) mitgenommen werden.

4. Schwerkraftabscheider nach Anspruch 3, **dadurch gekennzeichnet, dass** der Arm (11) mit einem Krählwerk (12a) versehen ist, welches das Voreindicken des Schlamms begünstigt.

5. Schwerkraftabscheider nach einem der vorhergehenden Ansprüche, **dadurch gekennzeichnet, dass** die Einrichtungen (M1) zum Regeln des Massendurchflusses der in den Schwerkraftabscheider einströmenden Schwebstoffe aufweisen:

   - eine Pumpe (13) mit variabler Geschwindigkeit zur Zufuhr von flüssigen Schlämmen,
   - einen Durchflussmesser (16) für die flüssigen Schlämme,
   - eine Sonde (15) zum Messen der Schwebstoffkonzentration (D1) in den flüssigen Schlämmen, und
   - einen Regler (30), der geeignet ist, die von dem Durchflussmesser (16) und der Sonde (15) kommenden Informationen zu empfangen, und der geeignet ist, die Geschwindigkeit der Zufuhrpumpe (13) zu steuern, um den Zufuhrdurchfluss (FM1) im Wesentlichen konstant zu halten.

6. Schwerkraftabscheider nach einem der vorhergehenden Ansprüche, **dadurch gekennzeichnet, dass** die Einrichtungen (M2) zum Regeln der Konzentration der voreingedickten Schlämme anhand des einströmenden Massendurchflusses aufweisen:

- eine Pumpe (26) mit variabler Geschwindigkeit zum Abführen von voreingedickten Schlämmen,
- einen Durchflussmesser (29) für voreingedickte Schlämme,
- eine Sonde (28) zum Messen der Schwebstoffkonzentration (D2) in den voreingedickten Schlämmen, und
- einen Regler (31), der geeignet ist, die von dem Durchflussmesser (29) und der Sonde (28) kommenden Informationen zu empfangen, und der geeignet ist, die Geschwindigkeit der Abführpumpe (26) zu steuern, um die Konzentration der voreingedickten Schlämme im Wesentlichen konstant zu halten, wobei der anfängliche abgezogene Durchsatz anhand des einströmenden Massendurchflusses (FM1) und eines Konzentrationssollwerts (ConsD2) des abgeführten Schlamms berechnet wird.

7. Schwerkraftabscheider nach einem der vorhergehenden Ansprüche, **dadurch gekennzeichnet, dass** das Schlammspiegelniveau (V) durch die Regeleinrichtungen im Wesentlichen auf dem Niveau der großen Basis eines kegelstumpfförmigen Bodens gehalten werden kann.

8. Schwerkraftabscheider nach Anspruch 2, **dadurch gekennzeichnet, dass** die Umfangsgeschwindigkeit des Abstreifers (10) zwischen 10 und 20 cm/s beträgt.

9. Wasseraufbereitungsanlage, **dadurch gekennzeichnet, dass** sie einen Schwerkraftabscheider nach einem der vorhergehenden Ansprüche aufweist, und dass der Abführausgang des Schwerkraftabscheiders direkt mit einer Schlammeindickungsvorrichtung verbunden ist, insbesondere einer Zentrifuge (3) oder einem Bandfilter, ohne einen Ausgleichsbehälter für eindicken Schlämme zwischen dem Schwerkraftabscheider (D) und der Schlammeindickungsvorrichtung.

**Claims**

1. A static settler for prethickening liquid sludge in a water treatment plant, in particular a wastewater plant, for optimizing the operation of the thickeners installed downstream of the settler, and, for providing that the residence time of the sludge in the settler does not exceed two hours, being equipped with

- a liquid sludge feed pump (13),
- a device (17) for injecting polymer into the liquid sludge,
- an overflow discharge (23)
- a pump (26) for extracting the prethickened sludge from the settler,
- means for accelerating the settling of the sludge comprising an inclined bottom (8) of the settler,
- means (M) for controlling the suspended solids concentration of the prethickened sludge at the outlet, capable of maintaining the concentration of the prethickened sludge extracted from the settler substantially constant, despite concentration variations at the inlet, and comprising means (M1) for controlling the mass flow (FM1) of suspended solids entering the settler, and means (M2) for controlling the concentration of the prethickened sludge from the inlet mass flow,

and means (M3) for controlling the level of the sludge blanket (V) capable of maintaining said level as low as possible, the means (M3) for controlling the level of the sludge blanket comprising a probe (24) for measuring the height of the sludge blanket, a variable speed polymer feed pump (19), a flowmeter (20) on the polymer injection line, and a controller (32) or speed variator receiving the data from the probe (24) measuring the height of the sludge blanket and from the flowmeter (20), and capable of controlling the speed of the pump (19) to optimize the polymer consumption.

2. The settler as claimed in claim 1, **characterized in that** the means for accelerating the settling of the sludge comprise an angle of inclination (a) of the bottom (8) of the settler to the horizontal of between 20° and 45°, and a rotating bottom scraper (10).

3. The settler as claimed in claim 2, **characterized in that** the scraper (10) comprises an arm (11) equipped with scraper blades (12) disposed in a slatted arrangement so as to convey the settled sludge effectively and rapidly toward a central pit (9) which is also scraped.

4. The settler as claimed in claim 3, **characterized in that** the arm (11) is equipped with a harrow (12a) promoting the prethickening of the sludge.

5. The settler as claimed in any one of the preceding claims, **characterized in that** the means (M1) for controlling the mass flow of suspended solids entering the settler comprise:

   - a variable speed liquid sludge feed pump (13),
   - a liquid sludge flowmeter (16),
   - a probe (15) for measuring the suspended solids concentration (D1) of the liquid sludge, and
   - a controller (30) capable of receiving the data from the flowmeter (16) and from the probe (15), and capable of controlling the speed of the feed pump (13) to maintain the feed mass flow (FM1) substantially constant.

6. The settler as claimed in any one of the preceding claims, **characterized in that** the means (M2) for controlling the concentration of the extracted sludge from the inlet mass flow comprise:

   - a variable speed prethickened sludge extraction pump (26),
   - a prethickened sludge flowmeter (29),
   - a probe (28) for measuring the suspended solids concentration (D2) of the prethickened sludge, and
   - a controller (31) capable of receiving the data from the flowmeter (29) and from the probe (28), and capable of controlling the speed of the extraction pump (26) to maintain the concentration of prethickened sludge substantially constant, the initial extraction rate being calculated from the inlet mass flow (FM1) and an extracted sludge concentration setpoint (Stpt D2).

7. The settler as claimed in any one of the preceding claims, **characterized in that** the level of the sludge blanket (V) can be maintained substantially at the level of the large base of the frustoconical bottom by the controlling means.

8. The settler as claimed in claim 2, **characterized in that** the peripheral speed of the scraper (10) is between 10 and 20 cm/s.

9. A water treatment plant, **characterized in that** it comprises a settler as claimed in any one of the preceding claims, and **in that** the settler extraction outlet is connected directly to a sludge thickener, in particular a centrifuge (3) or a belt filter, without a thickened sludge buffer tank between the settler (D) and the sludge thickener.

FIG.1

FIG.2

FIG.3

FIG.4

Concentration des
boues extraites

+d Cons D2

mes D2

Cons D2

-d Cons D2

—34

+ΔQmaxi

35

-ΔQmaxi

ΔQ=0

33

36

ΔQ1

+/-ΔQ

## FIG.5

Niveau voile de boue

E

S2

Niveau (t)

S1

Niveau LSL

37

0

Taux mini

Taux appliqué

Taux maxi

Taux

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Mémento Technique de l'Eau. vol. 2, 833